## Europäisches Patentamt

## European Patent Office

## Office européen des brevets

(19)

(11) Veröffentlichungsnummer: **0 224 833**
**B1**

(12) # EUROPÄISCHE PATENTSCHRIFT

(45) Veröffentlichungstag der Patentschrift:
**07.02.90**

(51) Int. Cl.⁴: **B60T 8/32**

(21) Anmeldenummer: **86116257.6**

(22) Anmeldetag: **24.11.86**

(54) **Bremsdruckregelsystem für ein Fahrzeug.**

(43) Veröffentlichungstag der Anmeldung:
**10.06.87 Patentblatt 87/24**

(45) Bekanntmachung des Hinweises auf die Patenterteilung:
**07.02.90 Patentblatt 90/6**

(84) Benannte Vertragsstaaten:
**BE DE FR GB IT SE**

(56) Entgegenhaltungen:
**DE-A- 3 417 389**

(73) Patentinhaber: **ROBERT BOSCH GMBH, Postfach 50, D-7000 Stuttgart 1(DE)**

(72) Erfinder: **Schramm, Herbert, Im Götzen 25, D-7000 Stuttgart 1(DE)**
Erfinder: **Wörner, Dieter, Blankensteinstrasse 5, D-7127 Pleidelsheim(DE)**
Erfinder: **Möller, Hubert, Bergheimer Strasse 37, D-7000 Stuttgart 31(DE)**

(74) Vertreter: **Kammer, Arno, Dipl.-Ing., ROBERT BOSCH GmbH Zentralstelle Patente 2 Postfach 50, D-7000 Stuttgart 1(DE)**

## Beschreibung

Die Erfindung betrifft ein Bremsdruckregelsystem mit den Merkmalen des Oberbegriffs des Anspruchs 1.

Es ist bekannt, daß bei <u>induktiven</u> Geschwindigkeitsmeßwertgebern, bei denen die Pole eines mit dem Fahrzeugrad verbundenen Polrads an dem Statorteil des Meßwertgebers vorbeilaufen, das Sensorausgangssignal bei Er -reichen einer kleinen, vom Luftspalt zwischen Rotor und Stator abhängigen Geschwindigkeit verschwindet bzw. unauswertbar wird.

Man hat deshalb für das einzelne Antiblockieregelsystem eine Grenzgeschwindigkeit festgelegt und bei Erreichen dieser Grenzgeschwindigkeit wird die Antiblockieregelung abgeschaltet. Dabei muß die Grenzgeschwindigkeit so festgelegt werden, daß auch im ungünstigen Fall die Abschaltung vor dem Aussetzen eines der Geschwindigkeitsmeßwertgeber erfolgt . Es kommt dann gegebenenfalls zu einem Radblockieren. Würde man es zu einem Aussetzen vor der Abschaltung kommen lassen, so würde ein Verzögerungssignal bzw. Schlupfsignal vorgetäuscht werden, was gegebenenfalls zu einer drucklosen Bremse führen würde. Aus der Kenntnis dieser Problematik wurde bereits auch bekannt (DE-A 22 57 237) zwar die "sichere" Grenzgeschwindigkeit beizubehalten, jedoch ab dieser Grenzgeschwindigkeit den vorhandenen Bremsdruck konstant zu halten (Steuerung).

Dem gegenüber bringt die Lösung gemäß den Merkmalen des Anspruchs 1 den Vorteil, daß jeder der Meßwertgeber individuell bis zu seiner Grenzgeschwindigkeit ausgenutzt wird, dann aber auch noch nicht die Gesamtregelung abschaltet, sondern in dem ihm zugeordneten Ansteuerkanal eine Hilfsmaßnahme einleitet. Diese kann in der Freigabe der zugehörigen Bremse (also Druckaufbau und eventuelles Blockieren des entsprechenden Rades), in einem Mitregeln des Bremsdrucks an dieser Bremse durch einen andern Kanal oder auch in der oben erwähnten Konstanthaltung des Drucks bestehen. Erst das Unterschreiten jeweils ihrer Grenzgeschwindigkeit durch mehrere Meßwertgeber führt zum Abschalten des Reglers. Bei folgenden Anfahrvorgängen kann der gespeicherte Wert überprüft und gegebenenfalls korrigiert werden.

Die Grenzgeschwindigkeit für den einzelnen Meßwertgeber kann z. B. der Geschwindigkeitswert sein, der sich nach Einsetzen des Meßwertgebers beim Anfahren und z. B. einer vollen Umdrehung des Rads ohne Aussetzer ( also Signal kontinierlich eine Umdrehung lang vorhanden) ergibt.

Ist die Beschleunigung bei Fahrtbeginn groß, so kann zumindest bei den angetriebenen Rädern positiver Bremsschlupf auftreten, der zu einem Fehler führen kann. Man wird deshalb vorzugsweise zeitlich nacheinander mehrere Geschwindigkeitswerte aufnehmen und aus dem Geschwinkigkeitsverlauf auf die Grenzgeschwindigkeit rückschließen.

Anhand der Zeichnung wird ein Ausführungsbeispiel der Erfindung näher erlläutert.

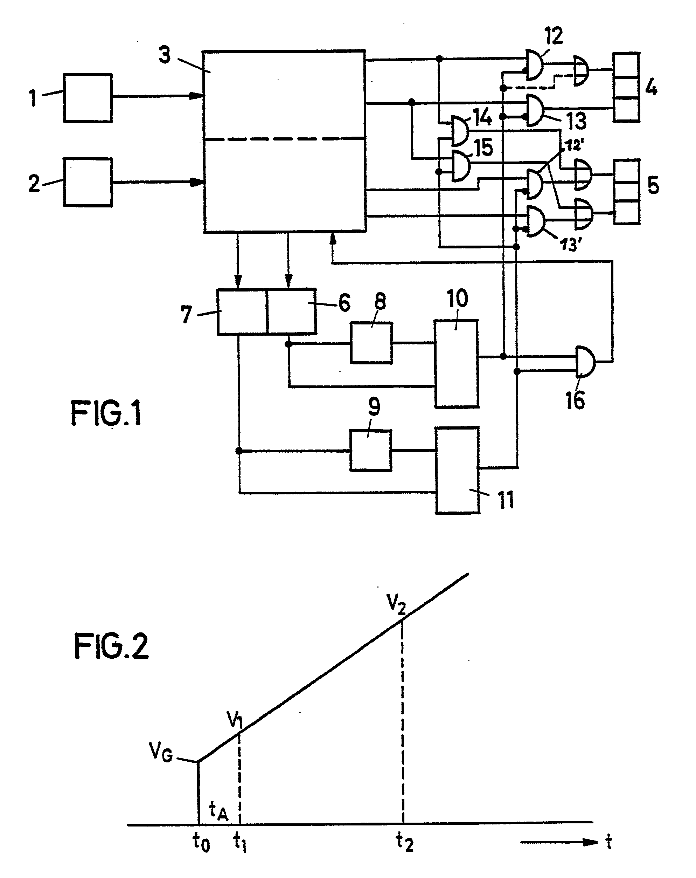

In Fig. 1 sind zwei Meßwertgeber 1 und 2 eines Antiblockierregelungssystems gezeigt, deren Signale einer Auswerteschaltung 3 zur an sich bekannten Erzeugung von Bremsdrucksteuersignalen zugeführt werden. Den Meßwertgebern 1 bzw. 2 sind Bremsdrucksteuerventile in Form von 3/3 Ventilen 4 bzw. 5 zugeordnet. Der Radbremsdruck an der Bremse der Räder, denen Meßwertgeber 1 bzw. 2 zugeordnet sind, wird durch diese Ventile, die neben einem Druckaufbau in den beiden anderen Stellungen einen Druckaufbau und eine Konstanthaltung ermöglicht entsprechend dem Radbewegungsverhalten geregelt.

Die in der Auswertschaltung 3 aufbereiteten Geschwindigkeitssignale der Meßwertgeber 1und 2 werden auch Schaltungseinrichtungen 6 und 7 zugeführt.

Diese stellen beim Anfahren des Fahrzeuges fest, wenn der einzelne Meßwertgeber ein brauchbares Geschwindigkeitssignal abgibt. Dies wird z. B. nach einer Zeit $\Delta T$ nach Einsetzen des Meßwertgebernsignals ohne Aussetzer in dieser Zeit $\Delta T$ als gegeben angenommen. Dieses Grenzgeschwindigkeitssignal wird jeweils in einen Speicher 8 bzw. 9 eingespeichert.

Erreicht während einer späteren Regelung das Radgeschwindigkeitssignal und/oder errechnete/tatsächliche Fahrzeuggeschwindigkeit z. B. des Meßwertgebers 1 seinen gespeicherten Bremsgeschwindigkeitswert, so gibt ein Vergleicher 10 ein Signal ab.

Wird, wie in Fig. 1 gezeigt, dieses Signal dazu benutzt Und-Gatter 12 und 13 zu sperren, so können keine Steuerisgnale mehr zum Ventil 4 gelangen, d.h. an der entsprechenden Radbremse wird voller Druck eingesteuert. Wurde nur das Und- Gatter 13 gesperrt und das Signal noch zur Ansteuerung des Ventils 4 in die Konstanthaltestellung benutzt (gestrichelt gezeigt), so wäre die Folge, daß der Druck konstant gehalten wird.

Schließlich ist im zweiten Kanal (2,5) der Fig. 1 noch die Möglichkeit gezeigt, daß zwar die Steuersignale des zugehörigen Kanals gesperrt werden (Und-Gatter 12' und 13'), daß jedoch das Ventil 5 nun durch die Signale des ersten Kanals (1/4) mitgesteuert wird (Und-Gatter 14 und 15 werden vom Ausgangssignal des Vergleichers 11 aufgesteuert).

Unterschreiten beide Ausgangssignale der Meßwertgeber 1 und 2 die Geschwindigkeitsgrenze, so wird ein Und-Gatter 16 durchlässig, das den Regler 3 abschaltet.

Um einen durch Beschleunigungen auftretenden Fehler im Grenzgeschwindigkeitssignal $V_G$ zu korrigieren, kann man gemäß Fig. 2 nach Einsetzen des Meßwertgebersignals ($t_0$) zwei Meßwerte $V_1$ und $V_2$ z.B. zum Zeitpunkt $t_1 = t_0 + t_A$ und $t_2 = t_0 + 5t_A$ (wobei $t_A$ die Rechenzeit des Rechners ist) bestimmen und aus diesen Werten den tatsächlichen Grenzgeschwindigkeitswert $V_G$ gemäß der Beziehung

$$V_G = V_1 - [\frac{1}{4}(V_2 - V_1)]$$

errechnen.

Solange noch keine sichere Erkennung von $V_G$ erfolgt ist und noch kein $V_G$ im Speicher abgelegt ist, wird für $V_G$ ein vorgegebener Festwert eingespeichert, der bei einer gültigen Erkennung von $V_G$ ersetzt wird.

Ist $V_G$ größer als ein Grenzewert, wird die Regelung gesamt oder an diesem Rad abgeschaltet und/oder dies durch z. B. eine Sicherheitslampe angezeigt.

## Patentansprüche

1. Bremsdruckregelsystem für ein Fahrzeug bei dem den Rädern wenigstens teilweise Meßwertgeber (12) zur Bestimmung der Raddrehgeschwindigkeit zugeordnet sind, bei dem die Signale dieser Meßwertgeber einer Auswertschaltung (3) zur Erzeugung von Bremsdrucksteuersignalen zugeführt werden und bei dem die erzeugten Bremsdrucksteuersignale Bremsdrucksteuereinheiten (4, 5) zur Variation des Bremsdrucks im Sinne einer Verhinderung des Radblockierens und/oder des Durchdrehens der Räder bei Fahrzeugbeschleunigung zugeführt werden, wobei bei Absinken der gemessenen Radgeschwindigkeiten auf einen kleinen Wert die Wirkung des Meßwertgebersignals auf die Regelung unterdrückt wird, <u>dadurch gekennzeichnet</u>, daß für jeden einzelnen Meßwertgeber (1, 2) beim Anfahren die Radgeschwindigkeit $V_G$ bestimmt wird, bei der der Meßwertgeber (1 und 2) ein auswertbares Signal sicher abgibt, daß dieser Radgeschwindigkeitswert abgespeichert wird (in 8 oder 9) und daß dieser gespeicherte Radgeschwindigkeitswert dazu benutzt wird, im Regelungsfall bei Erreichen dieses Grenzgeschwindigkeitswertes $V_G$ das Signal dieses Meßwertgebers (1 oder 2) für die Regelung unwirksam zu machen.

2. Bremsdruckregelsystem nach Anspruch 1, dadurch gekennzeichnet, daß anfangs ein vorgegebener Festwert in den Speicher eingeschrieben ist und daß dieser dann durch den ermittelten Wert für $V_G$ ersetzt wird.

3. Bei zu hohem Wert nach Anspruch 1 oder 2, dadurch gekennzeichnet, daß bei einem festgestellten, zu hohen Wert für $V_G$ eine Abschaltung und/oder Warnung erfolgt.

## Claims

1. Brake-pressure regulating system for a vehicle in which at least some of the wheels have allocated to them measured-value transmitters (1, 2) for determining the rotational speed of the wheel, in which the signals of these measured-value transmitters are fed to an evaluation circuit (3) for generating brake-pressure control signals and in which the brake-pressure control signals generated are fed to brake-pressure control units (4, 5) to vary the brake pressure with a view to preventing wheel locking and/or spinning of the wheels during vehicle acceleration, the action of the measured-value transmitter signal on regulation being suppressed if the measured wheel speeds fall to a low value, characterized in that during starting the wheel speed $V_G$ at which the measured-value transmitter (1 and 2) reliably emits a signal which can be evaluated is determined for each individual measured-value transmitter (1, 2), in that this wheel-speed value is stored (in 8 or 9) and in that this stored wheel-speed value is used, in the case of regulation, when this limiting-speed value $V_G$ is reached, to render the signal of this measured-value transmitter (1 or 2) inoperative for regulation.

2. Brake-pressure regulating system according to Claim 1, characterized in that a preset fixed value is initially written into the memory and in that this is then replaced by the value determined for $V_G$.

3. In the case of too high a value (sic) according to Claim 1 or 2, characterized in that if too high a value for $V_G$ is detected switching off is carried out and/or a warning issued.

## Revendications

1. Système de régulation de la pression de frein d'un véhicule dont les roues sont au moins partiellement équipées de capteurs (1, 2) pour déterminer la vitesse de rotation des roues, système dans lequel les signaux de ces capteurs sont appliqués à un circuit d'exploitation (3) pour générer des signaux de commande de pression de frein, et les signaux de commande de pression de frein sont transmis à des unités de commande de pression de frein (4, 5) pour modifier la pression de frein pour éviter le blocage des roues et/ou pour la sur-rotation des roues lors de l'accélération du véhicule, et lorsque les vitesses mesurées des roues diminuent jusqu'à une faible valeur, on supprime l'action des signaux des capteurs de mesure sur la régulation, système caractérisé en ce que pour chaque capteur de mesure (1, 2), on détermine la vitesse de la roue $V_G$ lors du démarrage, vitesse pour laquelle le capteur (1 et 2) fournit sûrement un signal exploitable, en ce qu'on met en mémoire la vitesse de la roue (dans 8 ou 9) et on utilise cette valeur de vitesse de roue mise en mémoire, dans le cas d'une régulation et lorsqu'on atteint cette valeur de la vitesse limite $V_G$, on inhibe le signal de ce capteur (1 ou 2) pour la régulation.

2. Système de régulation de la pression de frein selon la revendication 1, caractérisé en ce qu'initialement on inscrit dans la mémoire une valeur fixe prédéterminée et on remplace cette valeur par la valeur obtenue pour $V_G$.

3. Système de régulation de la pression de frein selon l'une des revendications 1 ou 2, caractérisé en ce que pour une valeur trop élevée, constatée pour $V_G$, on coupe le système et/ou on émet un signal-avertisseur.

FIG.1

FIG.2